# EUROPEAN PATENT APPLICATION

(11) **EP 0 530 736 A1**
(43) Date of publication of application: **10.03.1993**
(21) Application number: 92114876.3
(22) Date of filing: 31.08.1992
(51) Int. Cl.: G06F 13/22, G06F 13/38

(54) **Apparatus for gathering information**

(30) Priority: 03.09.1991 IT PD910149
(71) Applicant: SIGN S.r.l., I-30033 Noale (Province of Venezia) (IT)
(72) Inventor: Pirozzi, Luciano, I-30033 Noale (Venezia) (IT)
(74) Representative: Modiano, Guido, Dr.-Ing.

(57) **Abstract**

Apparatus for gathering information, particularly from users at assembly lines, public catering and the like, including a plurality of data entry means (1) arranged along a system bus (2) which extends from means (3) for its management connected to program-based control means (4), the system bus (2) and the program-based control means (4) being both connected to information production means (6) which provide the status of the system bus and information on options selected by each user.

## Description

The present invention relates to an apparatus for gathering information, particularly from users at assembly lines, public catering and the like.

In large-scale public catering, as well as in situations requiring the gathering of qualitative information in assembly lines, such as work progress status, or the visual quality of some products which cannot be easily assessed by means of automatic detection devices, the need to have systems for gathering information provided by users located in preset stations is particularly felt.

In fact, in all these situations and in others which are not mentioned, it is easy to set beforehand the number of options which can be chosen by the user, i.e. to preset lists of different options among which a user can choose.

The production of systems of this type currently entails the provision of a local network of computers, with costs which can be easily estimated as regards both each individual station and the maintenance which must be carried out on the network itself.

Management programs are furthermore particularly demanding and expensive, since they must make provisions for use by non-expert personnel and for network use, and thus provide for an absolutely excessive number of safeties in order to avoid problems both in user choice setting and in network management.

The aim of the present invention is to eliminate or substantially reduce the problems described above in known types by providing an apparatus for gathering information which is particularly simple to use, install and manage with respect to the provisions of a conventional computer network.

Within the scope of this aim, an object of the present invention is to provide an apparatus which is particularly easy to use for untrained personnel.

Not least object of the present invention is to provide an apparatus which is highly reliable, relatively easy to manufacture and at competitive costs.

This aim, the objects mentioned and others which will become apparent hereinafter are achieved by an apparatus for gathering information, particularly from users at assembly lines, public catering and the like, which is characterized in that it comprises a plurality of data entry means arranged along a system bus which extends from means for its management which are connected to program-based control means, said system bus and said program-based control means being both connected to information production means for providing the status of said system bus and information on options selected by each user.

Further characteristics and advantages of the present invention will become apparent from the description of a preferred but not exclusive embodiment of an apparatus for gathering information, particularly from users at assembly lines, public catering and the like, illustrated only by way of non-limitative example in the accompanying drawings, wherein:
figure 1 is a block diagram of an apparatus according to the invention;
figure 2 is a block diagram of a concentrator of the apparatus according to the invention; and
figure 3 is a block diagram of a terminal of the apparatus according to the invention.

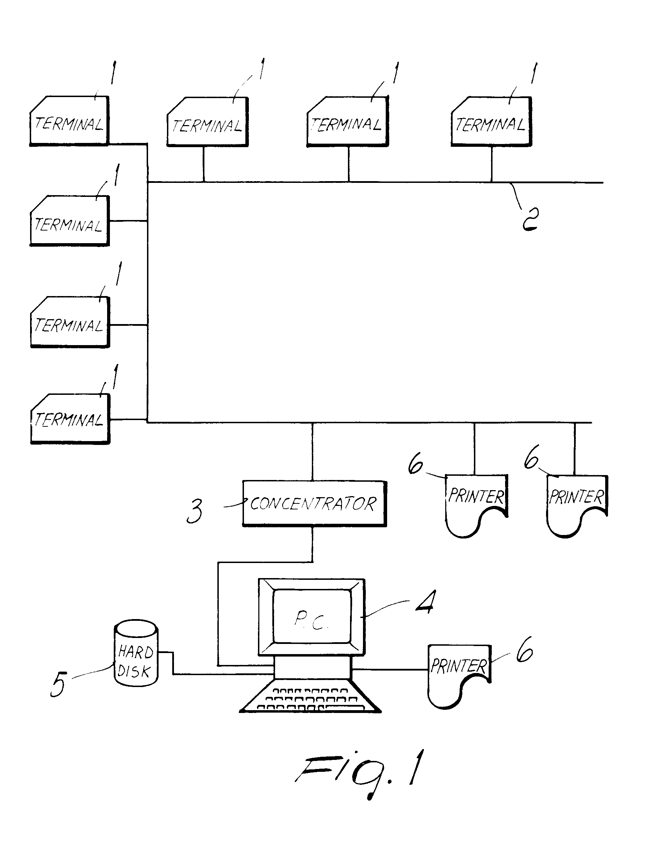

With reference to figure 1, an apparatus for gathering information from users, particularly for assembly lines, public catering and the like, comprises a plurality of data entry means which are arranged along a system bus, for example a serial, coaxial or other type of system bus, which extends from means for its management which are connected to program-based control means. The system bus and the program-based control means are both connected to information production means which provide the status of the system bus and information regarding options selected by each user.

The data entry means comprise at least one dedicated terminal, a series of which are designated by the reference numeral 1. Each dedicated terminal 1 is located in a preset position, for example one per table in the case of public catering, in order to gather the options selected by a user.

Said system bus comprises a cable 2 to which the dedicated terminals 1 and other components of the apparatus can be electrically connected, as will become apparent hereinafter.

The management means comprise at least one concentrator 3 which is connected to the cable 2 and which manages the information which travels along said cable toward and from the terminals 1.

The program-based control means comprise at least one area-management computer 4 provided with the information production means and with at least one high-speed hard disk 5 of adequate capacity for information storage. Preferably, but not necessarily, the area-management computer 4 is a personal computer.

The information production means comprise a printer 6 which prints the information entered by the users at the terminals 1. In particular, in the field of public catering, one printer 6, located on the cable 2, can be placed in the bar for beverage and ice-cream orders, another printer can be located in the kitchen for the orders of dishes selected on the terminals, and a further printer can be located at the cash desk in order to print the bills for each table.

A printer 6 is instead connected to the area-management computer 4 in order to print information related to each individual station or to statistics, reports, cash balances and the like.

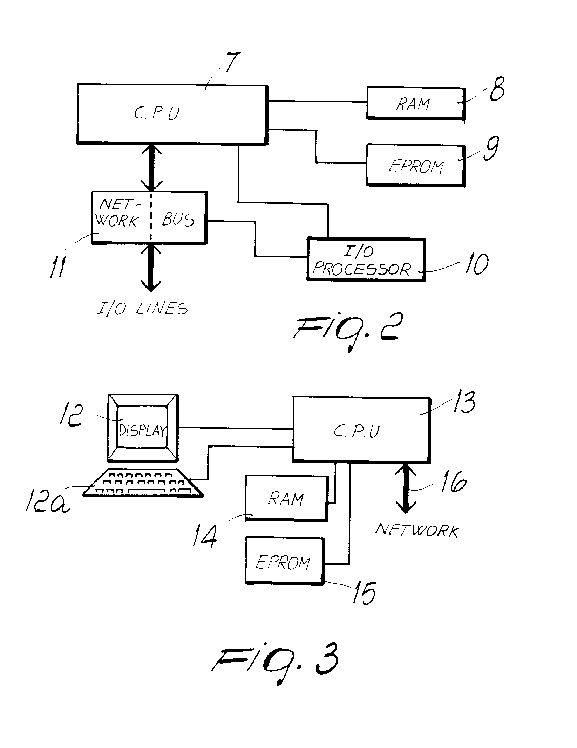

With reference to figure 2, a concentrator for an apparatus for gathering information from users in preset or variable positions comprises a central processing unit 7 which is connected to a volatile memory 8, to a non-volatile memory 9 which contains instructions for the management of the concentrator, to information transmission management means 10 and to transmission lines 11 whose input is connected to the central processing unit and to the information transmission management means and whose output is connected to a system bus 2 and to an internal bus of the area-management computer 4.

The central processing unit comprises a microprocessor 7 which handles the concentrator by means of the instructions contained in the non-volatile memory.

The volatile memory comprises a plurality of random-access memory (RAM) blocks 8, whereas the non-volatile memory comprises at least one read-only memory (EPROM) block 9. The information transmission management means comprise an input/output processor 10.

With reference to figure 3, a terminal for an apparatus for gathering information from users in preset or variable positions comprises a cabinet (not illustrated) inside which display means and information entry means are arranged.

The display means and the information entry means are connected to a central processing unit. Said central processing unit is connected to a volatile memory, which contains the selections made by a user, and to a non-volatile memory, which permanently contains information related to the functions of the terminal. The central processing unit is connected, by means of input/output lines 16, to the system bus 2 in order to receive data from program-based control means and download data contained in the volatile memory.

The display means comprise a display 12 (for example of the liquid-crystal type), whereas the information entry means comprise a keyboard 12a which has a limited and preset number of function keys.

The central processing unit comprises a microprocessor 13 which manages said terminal by means of the instructions contained in the non-volatile memory.

The volatile memory comprises a plurality of random-access memory (RAM) blocks 14, whereas the non-volatile memory comprises at least one read-only memory (EPROM) block 15.

Operation is briefly as follows: the user chooses the option or options he wishes (in particular, in the field of public catering, the dishes which he wishes to receive) on a terminal 1 by means of the keyboard 13 and by reading the lists displayed on the display 12, and immediately obtains the total amount to be spent.

The information gathered is temporarily stored in the random-access memory 14 before it is sent to the cable 2 and to the concentrator 3 by the microprocessor 13 by means of the input/output lines 16.

Once the information has been gathered by the concentrator 3, it is sent to the area-management computer 4 for processing. The printers 6, which are located, in the particular example, in the kitchen and in the bar, furthermore print the orders placed from a particular terminal 1. Finally, the bill for each terminal 1 is then printed at the cash desk.

Adaptations for other applications, which again comprise selections on lists which are preset but can vary in the course of time, are obvious from what has been described above.

From an information-processing point of view, the data exchanged between the concentrator 3 and the area-management computer 4 can be defined as high-level, whereas the information which travels along the cable 2 can be defined as low- level.

By means of practical tests it has been observed that the intended aim and objects are achieved by the apparatus according to the invention, advantageously simplifying the operations required to select options in preset lists.

The apparatus according to the invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for gathering information, particularly from users at assembly lines, public catering and the like, characterized in that it comprises a plurality of data entry means (1) arranged along a system bus (2) which extends from means for its management (3) which are connected to program-based control means (4), said system bus and said program-based control means being both connected to information production means (6) which are suitable to provide the status of said system bus and information on options selected by each user.

2. Apparatus according to claim 1, characterized in that each of said plurality of data entry means comprises a dedicated terminal (1) which is suitable to be arranged in preset or variable positions in order to receive the options chosen by a user.

3. Apparatus according to the preceding claims, characterized in that said system bus comprises a cable (2) to which said plurality of terminals (1) is electrically connected.

4. Apparatus according to one or more of the preceding claims, characterized in that said management means comprise at least one concentrator (3) which is suitable to handle the data which travel along said cable (2) toward and from said plurality of terminals (1).

5. Apparatus according to one or more of the preceding claims, characterized in that said program-based control means comprise at least one area-management computer (4) which is provided with said information production means and with at least one high-speed hard disk (5) of adequate capacity for information storage.

6. Apparatus according to one or more of the preceding claims, characterized in that said information production means comprise a printer (6) which is suitable to produce the data entered by said users at said terminals (1).

7. Terminal for apparatus for gathering information from users in preset or variable positions, characterized in that it comprises display means (12) and data entry means (12a), said display means and said data entry means being connected to a central processing unit (13) which is connected to a volatile memory (14), which is suitable to contain the choices made by a user, and to a non-volatile memory (15), in which instructions related to the functions of said terminal are permanently stored, said central processing unit being connected, by means of input/output lines (16), to a system bus for receiving data from program-based control means and for downloading data contained in said volatile memory.

8. Terminal according to claim 7, characterized in that said display means (12) comprise a liquid-crystal display.

9. Terminal according to claims 7 and 8, characterized in that said data entry means (12a) comprise a keyboard which has a limited and preset number of function keys.

10. Terminal according to one or more of claims 7 to 9, characterized in that said central processing unit (13) comprises a microprocessor which is suitable to manage said terminal by means of said instructions contained in said non-volatile memory (16).

11. Terminal according to one or more of claims 7 to 10, characterized in that said volatile memory (14) comprises a plurality of random-access memory blocks.

12. Terminal according to one or more of claims 7 to 11, characterized in that said non-volatile memory (15) comprises at least one read-only memory block.

13. Concentrator for apparatus for gathering information from users in preset or variable positions, characterized in that it comprises a central processing unit (7) which is connected to a volatile memory (8), to a non-volatile memory (9) which contains instructions for the management of said concentrator, to information transmission management means (10) and to transmission lines (11) whose input is connected to said central processing unit (7) and to said information transmission management means (10) and whose output is connected to a system bus and to an internal bus of an area-management computer.

14. Concentrator according to claim 13, characterized in that said central processing unit (7) comprises a microprocessor which is suitable to manage said concentrator by means of said instructions contained in said non-volatile memory (9).

15. Concentrator according to claims 13 and 14, characterized in that said volatile memory (8) comprises a plurality of random-access memory blocks.

16. Concentrator according to one or more of claims 13 to 15, characterized in that said non-volatile memory (9) comprises at least one read-only memory block.

17. Concentrator according to one or more of claims 13 to 16, characterized in that said information transmission management means (10) comprise an input/output processor.
